# EUROPÄISCHE PATENTSCHRIFT

(11) **EP 0 984 374 B1**
(45) Veröffentlichungstag und Bekanntmachung des Hinweises auf die Patenterteilung: **15.03.2000**
(21) Anmeldenummer: 98117862.7
(22) Anmeldetag: 21.09.1998
(51) Int. Cl.: G06F 17/60

(54) **Verfahren und Vorrichtung zur Datenübermittlung in einem Rechnernetzwerk**
Method and Apparatus for data transfer in a computer network
Procédé et dispositif de transfert de données dans un réseau ordinateur

(43) Veröffentlichungstag der Anmeldung: 08.03.2000
(73) Patentinhaber: Antwerpes & Partner AG, 50667 Köln (DE)
(72) Erfinder: Antwerpes, Frank, Dr., 50395 Köln (DE)
(74) Vertreter: Dendorfer, Claus

(56) Entgegenhaltungen:
- US-A- 5 724 521
- US-A- 5 794 210
- US-A- 5 809 242

## Beschreibung

Die Erfindung betrifft ein Verfahren und eine Vorrichtung zur Datenübermittlung in einem Rechnernetzwerk. Die Erfindung ist für eine Vielzahl von Anwendungen einsetzbar, bei denen Daten an einen Benutzer übermittelt werden und eine irgendwie geartete Rückmeldung erfolgen soll.

Aus der US-Patentschrift 5,794,210 ist es bekannt, Informationen auf einer allgemein zugänglichen Internet-Seite bereitzustellen. Ein Benutzer kann mittels eines üblichen Internet-Browsers auf die Seite zugreifen und durch einen Mausklick eine Vergütungsbuchung auslösen. Als Reaktion auf den Mausklick werden Identifizierungsdaten, die der Benutzer manuell eingegeben hat, an eine für alle Benutzer gleiche Adresse gesendet. Ein vorbestimmter Betrag wird daraufhin auf einem Konto des Benutzers gutgebucht.

Insgesamt muß der Benutzer also mehrmals aktiv tätig werden, nämlich zunächst zum Zugreifen auf die Internet-Seite, dann zum Eingeben der Identifizierungsdaten und schließlich zum Auslösen der Vergütungsbuchung. Dies ist umständlich und daher unerwünscht. Außerdem ist das genannte Verfahren nur zur Verwendung mit Internet-Browsern vorgesehen.

Aus US 5,809,242 ist ein E-Mail-System bekannt, das einem Benutzer lokal gespeicherte Werbeanzeigen präsentiert. Die Werbeanzeigen werden gemäß einem Benutzerprofil ausgewählt; sie sind jedoch unabhängig von den eigentlichen E-Mail-Nachrichten.

US 5,724,521 zeigt ein Verfahren und eine Vorrichtung zum Bereitstellen von elektronischer Werbung, die gemäß einem Benutzerprofil ausgewählt wird.

Es ist Aufgabe der Erfindung, die genannten Probleme zu vermeiden und ein möglichst benutzerfreundliches und dadurch effektives Verfahren zur Datenübermittlung in einem Rechnernetzwerk bereitzustellen. Das Verfahren soll insbesondere möglichst wenig aktives Eingreifen des Benutzers in beiden Kommunikationsrichtungen erfordern und eine hohe Akzeptanz bei den Benutzern erreichen.

Erfindungsgemäß wird diese Aufgabe durch ein Verfahren mit den Merkmalen des Anspruchs 1 sowie durch eine Vorrichtung mit den Merkmalen des Anspruchs 10 gelöst. Die abhängigen Ansprüche betreffen bevorzugte Weiterentwicklungen der Erfindung.

Die Erfindung geht von der Grundidee aus, als Kommunikationsmittel für die Datenübermittlung in Richtung zum Benutzer Postnachrichten zu verwenden, in die je ein Rückmeldeaufruf eingebettet ist. Der Rückmeldeaufruf weist seinerseits individualisierte Identifizierungsdaten auf. In Reaktion auf eine Benutzeraktion werden die Identifizierungsdaten zurückgesendet. Der erstmalige Empfang der Identifizierungsdaten bewirkt eine vorbestimmte Datenbankmodifikation.

Durch die erfindungsgemäße Verwendung von Postnachrichten, die dem Benutzer zugesandt werden, braucht der Benutzer nicht mehr von sich aus die Internet-Seite eines Datenanbieters mittels eines Browsers anzusprechen. Vielmehr werden die Postnachrichten dem Benutzer direkt zugestellt. Der Benutzer kann beispielsweise ein übliches E-Mail-Programm verwenden, um die Postnachrichten zu lesen. Wenn der Benutzer im Rahmen des normalen Tagesablaufs seine Post liest, erhält er die Postnachrichten ohne weiteres Zutun.

Durch die erfindungsgemäß ferner vorgesehene Rückmeldemöglichkeit kann das Angebot für den Benutzer attraktiver gestaltet werden, so daß eine hohe Akzeptanz erreicht wird. In bevorzugten Ausführungsformen ist vorgesehen, dem Benutzer einen Anreiz oder eine Vergütung für die Rückmeldung zu gewähren. Beispielsweise kann dem Benutzer ein Konto zugeordnet sein, dessen Kontostand in Reaktion auf die Rückmeldung erhöht wird. Das Konto kann in einer beliebigen "Währung" im weitesten Sinne geführt werden. Zum Beispiel kann der Benutzer für das Absenden der Rückmeldung Freimeilen oder Bonuspunkte erhalten, die gegen Güter oder Dienstleistungen eingetauscht werden können. Vorzugsweise besteht die Vergütung aus einem Geldbetrag. In diesem Fall erfolgt bevorzugt in regelmäßigen Abständen und/oder bei Überschreiten einer Grenze eine dem Kontostand entsprechende Zahlung an den Benutzer.

In bevorzugten Ausführungsformen ist die Höhe der Vergütung konstant vorgegeben oder von vorbestimmten Faktoren (zum Beispiel der Aktivität des Benutzers) abhängig. Ferner können Zufallselemente eingesetzt werden. So kann zum Beispiel der Benutzer in der Art einer Lotterie als Vergütung eine Chance auf einen relativ hohen Gewinn erhalten.

Alternativ oder zusätzlich zu einer Vergütung kann die Rückmeldemöglichkeit auch verwendet werden, um eine zuverlässige Bestätigung des Empfangs der Postnachricht durch den Benutzer mit minimalem Aufwand zu erhalten. Bei geeigneter Formulierung der Postnachricht kann diese Bestätigung als Willenserklärung des Benutzers aufgefaßt werden. Neben dem in den unabhängigen Ansprüchen genannten Rückmeldeaufruf können in eine Postnachricht weitere Rückmeldeaufrufe mit unterschiedlichen Identifizierungsdaten eingebunden sein. Dies ermöglicht eine Wahl des Benutzers zwischen mehreren Rückmeldealternativen, durch die er sich beispielsweise an Umfragen oder Abstimmungen beteiligen kann.

In bevorzugten Ausführungsformen ist die Postnachricht individuell an den Benutzer adressiert und vorzugsweise eine übliche E-Mail-Nachricht. Durch die bereits erwähnten Anreize wird eine Verärgerung des Benutzers beim Empfang unerwünschter Post vermieden. Vorzugsweise ist vorgesehen, daß der Benutzer sich durch eine Anmeldung ausdrücklich zum Erhalt der Postnachrichten bereit erklärt. Bei dieser Anmeldung kann vorgesehen sein, daß der Benutzer Präferenzen und/oder Interessen und/oder Sperrvermerke angibt, so daß die Art der an ihn gesendeten Postnachrichten seinen Wünschen angepaßt werden kann.

Durch die Anmeldung und Zustimmung des Benutzers werden Einschränkungen, die die Rechtsprechung in einigen Ländern für den Versand elektronischer Postnachrichten aufgestellt hat, vermieden. Die Erfindung schafft somit die technischen Grundlagen, um die kosten- und umweltfreundliche E-Mail neben den bisher üblichen Briefversand als Marketinginstrument treten zu lassen. Die Erfindung eignet sich besonders für den automatisierten Versand von Postnachrichten an eine Vielzahl von Empfängern.

Erfindungsgemäß ist vorgesehen, daß die Identifizierungsdaten in Reaktion auf eine Benutzeraktion an einen Server zurückgesendet werden. Die Benutzeraktion ist vorzugsweise nur wenig aufwendig. Zum Beispiel kann die Benutzeraktion ein einfacher Mausklick sein, den der Benutzer in seinem gewöhnlichen E-Mail-Programm durchführt, ohne daß er zuerst einen Internet-Browser aufrufen muß. In bevorzugten Ausführungsformen ist der Rückmeldeaufruf ein CGI-Aufruf (CGI = Common Gateway Interface), der in Form eines Hyperlinks in die Postnachricht eingebettet ist. Durch Klicken auf den Hyperlink in der angezeigten Postnachricht wird eine entsprechende CGI-Routine des Servers aktiviert, die ihrerseits Kontakt mit einer geeigneten Datenbank aufnimmt.

Vorzugsweise ist der Rückmeldeaufruf ein Befehl, mit dem das E-Mail-Programm des Benutzers zum Abschicken der Rückmeldung veranlaßt werden kann. Im Rückmeldeaufruf können eine Adresse des Servers und die Identifizierungsdaten enthalten sein. Die Identifizierungsdaten beinhalten vorzugsweise ihrerseits Daten, die den Benutzer und/oder die Aussendungsaktion (Job) identifizieren und/oder eine Kontrolle im Sinne einer Prüfziffer ermöglichen. Nach dem Erhalt der Rückmeldung durch den Server kann eine Empfangs- und Buchungsbestätigung an den Benutzer geschickt werden, beispielsweise wieder als Postnachricht oder in Form einer HTML-Seite (HTML = Hypertext Markup Language), die auf einem Internet-Browser des Benutzers angezeigt wird.

Die erfindungsgemäße Vorrichtung weist mehrere logische Datenbanken auf, die in einer Implementierung beliebig zusammengefaßt sein können oder weitere Datenfelder aufweisen können. Vorzugsweise ist die Vorrichtung mit Merkmalen weitergebildet, die den bereits geschilderten und/oder den in den Verfahrensansprüchen erwähnten Merkmalen entsprechen.

Ein Ausführungsbeispiel der Erfindung sowie mehrere Ausführungsalternativen werden nun unter Hinweis auf die schematischen Zeichnungen genauer erläutert. Es zeigen:
- Fig. 1: eine Darstellung der beteiligten Komponenten, und
- Fig. 2: ein Ablaufdiagramm des Verfahrens in dem beschriebenen Ausführungsbeispiel.

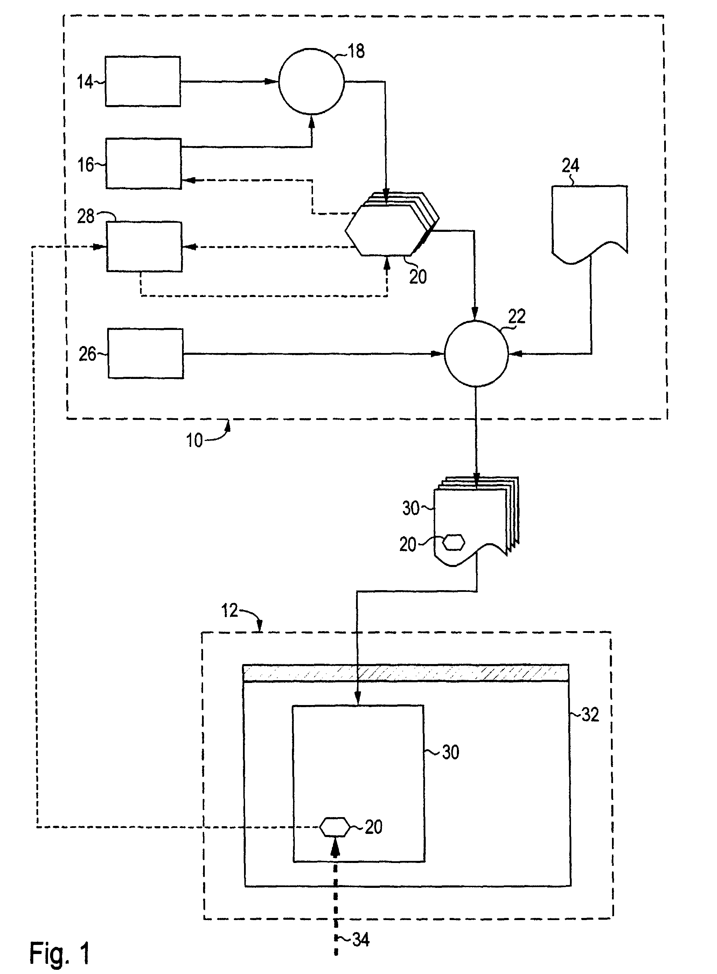

In Fig. 1 sind ein Server 10 und ein Benutzerrechner 12 gezeigt, die über ein an sich bekanntes Netzwerk, beispielsweise das Internet, zur Datenübertragung verbunden sind. Die Verbindung kann ständig oder zeitweise sein und über Vermittlungsstationen oder andere Rechner verlaufen. Der Server 10 ist im hier beschriebenen Ausführungsbeispiel ein leistungsfähiger Rechner, der eine Vielzahl von Prozessen, Programmen und Programmodulen ausführt. In Ausführungsalternativen werden die Funktionen des Servers 10 von mehreren miteinander vernetzten Computern ausgeführt. Der Benutzerrechner 12 ist ein üblicher persönlicher Computer (PC), der ein E-Mail-Programm ausführt.

Als für die Erfindung relevante Komponenten des Servers 10 sind in Fig. 1 eine Job-Datenbank 14 und eine Konten-Datenbank 16 gezeigt. Ein Aufruferzeugungsmodul 18 erhält Daten über die registrierten Benutzer und über die einzelnen Aussendungsaktionen (Jobs) von den Datenbanken 14, 16. Das Aufruferzeugungsmodul 18 generiert aus diesen Daten eine Vielzahl von Rückmeldeaufrufen 20. Ein Einbindemodul 22 bindet je einen Rückmeldeaufruf 20 in eine für je eine Aussendungsaktion vorgegebene Nachrichtenvorlage 24 ein und fügt eine von einer Empfänger-Datenbank 26 stammende Benutzeradresse hinzu. Der Server 10 weist ferner eine Flag-Datenbank 28 zum Speichern noch ausstehender und bereits empfangener Rückmeldungen auf.

Die von dem Einbindemodul 22 erzeugten Postnachrichten 30, die je einen Rückmeldeaufruf 20 aufweisen, werden als E-Mails zum Benutzerrechner 12 übermittelt. Das auf dem Benutzerrechner 12 laufende E-Mail-Programm, das beispielsweise das unter der Marke "Eudora" erhältliche sein kann, zeigt die empfangene Postnachricht 30 einschließlich des Rückmeldeaufrufs 20 in einem Fenster 32 auf einem Bildschirm des Benutzerrechners 12 an. Dabei wird der als Hyperlink ausgestaltete Rückmeldeaufruf 20 zum Beispiel durch eine Unterstreichung hervorgehoben. Der Benutzer kann die Postnachricht lesen und durch einen Mausklick 34 veranlassen, daß der Rückmeldeaufruf 20 ausgeführt wird.

Wenn der Benutzer die Rückmeldung veranlaßt, werden die in Fig. 1 durch gestrichelte Pfeile gezeigten Kommunikationsvorgänge ausgeführt. Über das den Server 10 und den Benutzerrechner 12 verbindende Netzwerk wird eine CGI-Routine des Servers 10 aufgerufen, und die in dem Rückmeldeaufruf enthaltenen Identifizierungsdaten werden an die CGI-Routine übergeben. Ein von der CGI-Routine angesprochenes Zugriffsprogramm steuert eine Abfrage der Flag-Datenbank 28. Wenn gültige Identifizierungsdaten zum ersten Mal eingehen, bewirkt das Zugriffsprogramm einerseits eine Gutschrift eines vorbestimmten Geldbetrags auf einem Konto des Benutzers in der Konten-Datenbank 16 ("Micropayment") und andererseits einen entsprechenden Eintrag in der Flag-Datenbank 28, der die Identifizierungsdaten als empfangen und damit "verbraucht" klassifiziert.

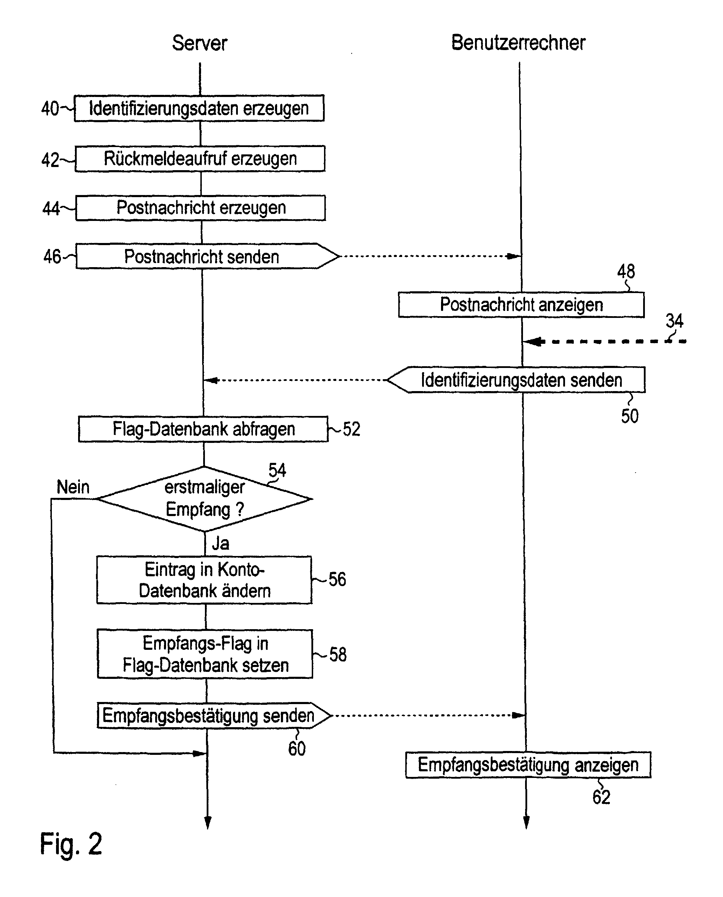

Das bisher zusammenfassend beschriebene Verfahren wird nun unter Hinweis auf Fig. 2 genauer erläutert. In einem vorbereitenden Schritt hat sich der Benutzer bei einem Dienstanbieter angemeldet. Er hat dabei seine Zustimmung zum Empfang von E-Mail-Nachrichten erklärt und ein in der Konten-Datenbank 16 geführtes Benutzerkonto eröffnet. Die E-Mail-Adresse des Benutzers wurde bei der Anmeldung in der Empfänger-Datenbank 26 gespeichert.

Wenn der Dienstanbieter eine Aussendungsaktion (Job) durchführt, wird eine Vielzahl von Postsendungen 30 erzeugt. Für jede Postsendung 30 ist ein neuer Rückmeldeaufruf 20 erforderlich, der seinerseits individualisierte Identifizierungsdaten aufweist. Individualisiert heißt hier, daß jeder Rückmeldeaufruf 20 genau ein vorbestimmtes Benutzerkonto anspricht. Ferner ist jeder Rückmeldeaufruf genau einmal für eine Kostenerstattung gültig.

Die in Schritt 40 erzeugten Identifizierungsdaten bestehen im hier beschriebenen Ausführungsbeispiel aus einem ersten Abschnitt mit der Kontonummer des Benutzers, einem zweiten Abschnitt mit einer laufenden Nummer der Aussendung (Job) und einem dritten Abschnitt mit einer zufallsgenerierten Kontrollnummer, um Mißbrauch oder Täuschungen zu verhindern. Die Kontonummer stammt von der Konten-Datenbank 16 und kann beispielsweise eine sechsstellige Zahl sein. Die von der Job-Datenbank 14 stammende Aussendungsnummer kann eine achtstellige Zahl sein, und die Kontrollnummer eine vierstellige Zahl. Als Beispiel können die Identifizierungsdaten etwa 123456-12345678-1234 lauten. In Ausführungsalternativen sind in den Identifizierungsdaten mehr oder weniger oder andere Informationen enthalten, die als Ziffern und/oder Buchstaben und/oder Sonderzeichen kodiert sein können.

Das Aufruferzeugungsmodul 18 bildet in Schritt 42 aus den Identifizierungsdaten und der Adresse des Servers 10 einen als CGI-Abfrage ausgestalteten Rückmeldeaufruf 20. Genauer gesagt, wird als Serveradresse der URL (Unique Resource Locator) der CGI-Routine verwendet, die das Zugriffsprogramm auf dem Server 10 anspricht. Beispielsweise kann diese Adresse http://www.medimail.de/x.cgi? lauten. Insgesamt hat der Rückmeldeaufruf 20 dann die Form:
http://www.medimail.de/x.cgi?123456-12345678-1234

In Schritt 44 erzeugt das Einbindemodul 22 die Postnachricht 30. Dazu wird die vorgegebene Nachrichtenvorlage 24 mit je einem Rückmeldeaufruf 20 versehen. Außerdem wird die E-Mail-Adresse des Empfängers, dessen Kontonummer im Rückmeldeaufruf 20 genannt ist, aus der Empfänger-Datenbank 26 abgerufen und als Adresse der Postnachricht 30 verwendet. Die im folgenden beispielhaft gezeigte Postnachricht 30 besteht aus einem Mail-Header (mit Empfängeradresse), einem Mail-Text (entsprechend der Nachrichtenvorlage 24) und dem individualisierten Rückmeldeaufruf 20:
Subject: DemoMail
Date: Mon, 31 Mai 1998 12:24:40 +0100
From: sendout@medimail.de
To: martin@muster.de

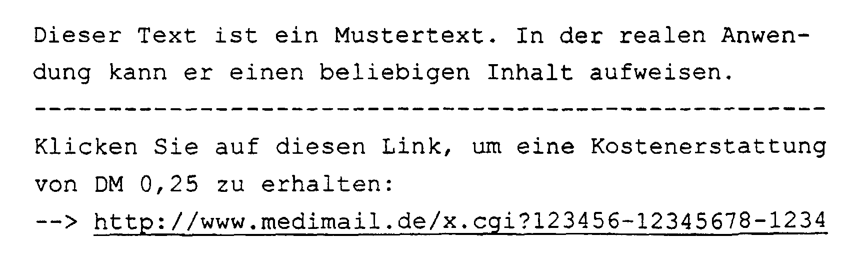

Die Postnachricht 30 wird in Schritt 46 an den Benutzer verschickt und in Schritt 48 auf dem Bildschirm des Benutzerrechners 12 angezeigt. Dabei interpretiert das E-Mail-Programm den Rückmeldeaufruf 20 als Hyperlink und stellt ihn unterstrichen dar. Wenn der Mausklick 34 auf den Hyperlink erfolgt, ruft das E-Mail-Programm die CGI-Routine des Servers 10 auf und übermittelt dadurch die Identifizierungsdaten an den Server 10 (Schritt 50).

Gesteuert durch das Zugriffsprogramm wird nun überprüft, ob die Identifizierungsdaten gültig sind und somit zu einer Kostenerstattung führen sollen. Dabei wird sowohl die Korrektheit der Kontrollnummer überprüft als auch, ob es sich um den erstmaligen Empfang der Identifizierungsdaten handelt (Schritte 52 und 54).

Im hier beschriebenen Ausführungsbeispiel sind alle von dem Aufruferzeugungsmodul 18 zusammengestellten Identifizierungsdaten mit ihren jeweils zufällig ermittelten Kontrollnummern bei der Erzeugung der Rückmeldeaufrufe 20 in der Flag-Datenbank 28 gespeichert worden. Wenn ein Identifizierungsdatensatz beim Server 10 eingeht, wird der zugehörige Eintrag in der Flag-Datenbank 28 gesucht. Ist kein solcher Eintrag vorhanden, so ist der Identifizierungsdatensatz gefälscht und wird verworfen.

Ist der empfangene Identifizierungsdatensatz dagegen korrekt, also ein entsprechender Eintrag vorhanden, so wird ein Empfangs-Flag in diesem Eintrag überprüft. Wenn das Flag noch nicht gesetzt ist, dann handelt es sich um den erstmaligen Empfang der Identifizierungsdaten. Der Kontostand des entsprechenden Benutzerkontos in der Konten-Datenbank 16 wird um den vereinbarten Betrag erhöht (Schritt 56), und das Empfangs-Flag in der Flag-Datenbank 28 wird gesetzt (Schritt 58). Diese Maßnahme verhindert eine mehrmalige Vergütung, da bei einem weiteren Empfang derselben Identifizierungsdaten das gesetzte Empfangs-Flag in Schritt 54 erkannt wird und die darauffolgenden Schritte übersprungen werden.

Bei erfolgreicher Vergütungsbuchung wird eine Empfangsbestätigung an den Benutzer gesendet (Schritt 60). Die Empfangsbestätigung ist im hier beschriebenen Ausführungsbeispiel eine HTML-Seite, die von einem durch das E-Mail-Programm aufgerufenen Browser angezeigt wird (Schritt 62). In Ausführungsalternativen ist die Empfangsbestätigung eine E-Mail. Ferner kann auch bei einem Fehlschlagen der Gutbuchung eine entsprechende Meldung an den Benutzer gesandt werden.

In weiteren Ausführungsalternativen ist die Kontrolle der Gültigkeit und des erstmaligen Empfangs der Identifizierungsdaten anders gelöst. Beispielsweise können alle ausgegebenen, aber noch nicht empfangenen Identifizierungsdatensätze in einer Datenbank gespeichert sein. Beim erstmaligen Empfang eines Datensatzes wird der entsprechende Eintrag in der Datenbank gelöscht und somit der Datensatz als in Zukunft ungültig klassifiziert. Die Kontrollinformation ist in weiteren Ausführungsvarianten nicht zufallsgeneriert, sondern wird in einem vorbestimmten (geheimen) Verfahren aus der Benutzer- und/oder der Aussendungsidentifikation berechnet. Dann kann die Korrektheit der Identifizierungsdaten bei deren Empfang ohne einen Datenbankzugriff überprüft werden, und die Flag-Datenbank 28 wird nur eingesetzt, um mehrmalige Gutschriften zu verhindern.

Die von einem Benutzer angesammelten Vergütungsbeträge werden auf dem Benutzerkonto angesammelt und beispielsweise vierteljährlich (oder beim Überschreiten eines vorgegebenen Betrages) auf ein bei der Anmeldung angegebenes Bankkonto des Benutzers überwiesen.

Bei einer wirtschaftlichen Betrachtungsweise können die Rückmeldeaufrufe 20 als "Empfangsmarken" angesehen werden. Ein Interessent kann von dem Dienstanbieter einen Satz Empfangsmarken mit den zugehörigen E-Mail-Adressen der Benutzer erwerben. Der Dienstanbieter übernimmt dann die Verrechnung und Erstattung der angefallenen Vergütungen an die Benutzer. Somit spielen Empfangsmarken die Rolle einer Art von Briefmarken für E-Mail, die erforderlich sind, um die gewünschte Benutzerakzeptanz zu erreichen.

## Patentansprüche

1. Verfahren zur Datenübermittlung in einem Rechnernetzwerk, mit den Schritten:
a) Erzeugen (40) von individualisierten Identifizierungsdaten,
b) Erzeugen (42) eines Rückmeldeaufrufs (20), in den die Identifizierungsdaten eingebunden sind,
c) Erzeugen (44) einer Postnachricht (30), in die der Rückmeldeaufruf (20) eingebunden ist,
d) Senden (46) der Postnachricht (30) an einen Benutzer,
e) Empfangen der in Reaktion auf eine Benutzeraktion zurückübermittelten Identifizierungsdaten,
f) Überprüfen (54), ob die Identifizierungsdaten erstmalig empfangen wurden, und
g) Ändern (56) oder Erzeugen oder Löschen eines Datenbankeintrags in Reaktion auf den Empfang der Identifizierungsdaten, wenn die Identifizierungsdaten erstmalig empfangen wurden.

2. Verfahren nach Anspruch 1,
dadurch gekennzeichnet, daß die Identifizierungsdaten eine Benutzeridentifikation und/oder eine Aussendungsidentifikation und/oder eine Kontrollidentifikation enthalten.

3. Verfahren nach Anspruch 1 oder Anspruch 2,
dadurch gekennzeichnet, daß die Postnachricht (30) eine individuell an den Benutzer adressierte Nachricht, insbesondere eine E-Mail-Nachricht ist.

4. Verfahren nach einem der Ansprüche 1 bis 3,
dadurch gekennzeichnet, daß der Rückmeldeaufruf (20) eine Adresse eines Servers (10) und die Identifizierungsdaten enthält, und/oder daß der Rückmeldeaufruf (20) ein netzwerkbasierter Datenbankaufruf, insbesondere ein CGI-Aufruf ist.

5. Verfahren nach einem der Ansprüche 1 bis 4,
dadurch gekennzeichnet, daß als weiterer Schritt (60) eine Bestätigung des Empfangs der Identifizierungsdaten an den Benutzer gesendet wird.

6. Verfahren nach einem der Ansprüche 1 bis 5,
dadurch gekennzeichnet, daß das Verfahren für eine Vielzahl von Benutzern und/oder eine Vielzahl von Postnachrichten (30) wiederholt ausgeführt wird.

7. Verfahren nach einem der Ansprüche 1 bis 6,
dadurch gekennzeichnet, daß dem Benutzer ein Benutzerkonto zugeordnet ist, und daß in Schritt g) der Kontostand des Benutzerkontos verändert, insbesondere erhöht, wird.

8. Verfahren nach Anspruch 7,
dadurch gekennzeichnet, daß als weiterer Schritt in Reaktion auf das Erfüllen einer vorbestimmten Bedingung eine automatische Zahlung an den Benutzer entsprechend dem Kontostand des Benutzerkontos veranlaßt wird.

9. Verfahren nach einem der Ansprüche 1 bis 8,
dadurch gekennzeichnet, daß als vorbereitender Schritt eine Anmeldung durch den Benutzer erfolgt, die für eine Vielzahl von Postnachrichten (30) gültig ist.

10. Vorrichtung zur Datenübermittlung in einem Rechnernetzwerk, insbesondere zum Ausführen eines Verfahrens mit den Merkmalen eines der Ansprüche 1 bis 9, mit:
- mindestens einer Datenbank (14, 16) zum Bereitstellen von individualisierten Identifizierungsdaten,
- einem Aufruferzeugungsmodul (18) zum Erzeugen eines Rückmeldeaufrufs (20), in den die Identifizierungsdaten eingebunden sind,
- einem Einbindemodul (22) zum Erzeugen (44) einer Postnachricht (30), in die der Rückmeldeaufruf (20) eingebunden ist,
- einer Einrichtung zum Senden (46) der Postnachricht (30) an einen Benutzer und zum Empfangen der in Reaktion auf eine Benutzeraktion zurückübermittelten Identifizierungsdaten,
- einer Flag-Datenbank (28) zum Überprüfen (54), ob die Identifizierungsdaten erstmalig empfangen wurden, und
- einer Einrichtung zum Ändern (56) oder Erzeugen oder Löschen eines Datenbankeintrags in einer Konten-Datenbank (16) in Reaktion auf den Empfang der Identifizierungsdaten, wenn die Identifizierungsdaten erstmalig empfangen wurden.

## Claims

1. A method for data transmission in a computer network, comprising the steps of:
a) generating (40) individualized identification data,
b) generating (42) a reply call (20) into which the identification data are embedded,
c) generating (44) a mail message (30) into which the reply call (20) is embedded,
d) sending (46) the mail message (30) to a user,
e) receiving the identification data, which have been transmitted back in response to a user action,
f) testing (54) if the identification data have been received for the first time, and
g) modifying (56) or generating or deleting a database entry in response to the receipt of the identification data if the identification data have been received for the first time.

2. The method of claim 1,
characterized in that the identification data comprise a user identification and/or a sending job identification and/or a verification identification.

3. The method of claim 1 or claim 2,
characterized in that the mail message (30) is a message addressed individually to the user, in particular an e-mail message.

4. The method of one of claims 1 to 3,
characterized in that the reply call (20) comprises an address of a server (10) and the identification data, and/or in that the reply call (20) is a network-based database call, in particular a CGI call.

5. The method of one of claims 1 to 4,
characterized in that, as a further step (60), a confirmation of receipt of the identification data is sent to the user.

6. The method of one of claims 1 to 5,
characterized in that the method is executed repeatedly for a plurality of users and/or a plurality of mail messages (30).

7. The method of one of claims 1 to 6,
characterized in that a user account is associated with the user, and that the balance of the user account is changed, in particular incremented, in step g).

8. The method of claim 7,
characterized in that, as a further step, an automatic payment to the user corresponding to the balance of the user account is effected in response to meeting a predetermined condition.

9. The method of one of claims 1 to 8,
characterized in that, as a preliminary step, a registration by the user takes place, this registration being valid for a plurality of mail messages (30).

10. Apparatus for data transmission in a computer network, in particular for executing a method having the features of one of claims 1 to 9, comprising:
- at least one database (14, 16) for providing individualized identification data,
- a call generation module (18) for generating a reply call (20) in which the identification data are embedded,
- an embedding module (22) for generating (44) a mail message (30) in which the reply call (20) is embedded,
- a device for sending (46) the mail message (30) to a user and for receiving the identification data, said identification data having been transmitted back in response to a user action,
- a flag database (28) for testing (54) if the identification data have been received for the first time, and
- a device for modifying (56) or generating or deleting a database entry in an account database (16) in response to the receipt of the identification data, if the identification data have been received for the first time.

## Revendications

1. Procédé pour la transmission de données dans un réseau informatique, comportant les étapes qui consistent à:
a) générer (40) des données d'identification individualisées,
b) générer (42) un appel d'accusé de réception (20) dans lequel sont intégrées les données d'identification,
c) générer (44) un message (30) dans lequel est intégré l'appel d'accusé de réception (20),
d) envoyer (46) le message (30) à un utilisateur,
e) recevoir les données d'identification renvoyées en réponse à l'action de l'utilisateur,
f) vérifier (54) si les données d'identification ont été reçues pour la première fois, et
g) modifier (56) ou générer ou effacer un enregistrement dans une banque de données en réponse à la réception des données d'identification si les données d'identification ont été reçues pour la première fois.

2. Procédé selon la revendication 1, caractérisé en ce que les données d'identification contiennent une identification d'utilisateur et/ou une identification d'émission et/ou une identification de contrôle.

3. Procédé selon la revendication 1 ou 2, caractérisé en ce que le message (30) est un message adressé individuellement à l'utilisateur, en particulier un message électronique.

4. Procédé selon l'une des revendications 1 à 3, caractérisé en ce que l'appel d'accusé de réception (20) contient l'adresse d'un serveur (10) et les données d'identification, et/ou en ce que l'appel d'accusé de réception (20) est un appel de banque de données basé sur le réseau, en particulier un appel CGI (common gateway interface, soit interface a passerelle commune).

5. Procédé selon l'une des revendications 1 à 4, caractérisé en ce qu'une autre étape (60) consiste à envoyer à l'utilisateur une confirmation de la réception des données d'identification.

6. Procédé selon l'une des revendications 1 à 5, caractérisé en ce que le procédé est mis en oeuvre à plusieurs reprises pour un grand nombre d'utilisateurs et/ou un grand nombre de messages (30).

7. Procédé selon l'une des revendications 1 à 6, caractérisé en ce qu'un compte d'utilisateur est attribué à l'utilisateur et en ce que lors de l'étape g), le solde du compte de l'utilisateur est modifié, en particulier augmenté.

8. Procédé selon la revendication 7, caractérisé en ce que lors d'une autre étape, en réponse à une condition prédéfinie qui est remplie, un versement automatique est effectué à l'utilisateur en fonction du solde de son compte.

9. Procédé selon l'une des revendications 1 à 8, caractérisé en ce que lors d'une étape de préparation, une déclaration est faite par l'utilisateur, laquelle déclaration est valable pour un grand nombre de messages (30).

10. Dispositif pour la transmission de données dans un réseau informatique, en particulier pour la mise en oeuvre d'un procédé présentant les caractéristiques de l'une des revendications 1 à 9, comportant:
- au moins une banque de données (14, 16) pour fournir des données d'identification individuelles,
- un module de production d'appels (18) pour générer un appel d'accusé de réception (20) dans lequel sont intégrées les données d'identification,
- un module d'intégration (22) pour générer (44) un message (30) dans lequel est intégré l'appel d'accusé de réception (20),
- un dispositif pour envoyer (46) le message (30) à un utilisateur et pour recevoir les données d'identification renvoyées en réponse à une action de l'utilisateur,
- une banque de données d'indicateurs (28) pour vérifier (54) si les données d'identification ont été reçues pour la première fois, et
- un dispositif pour modifier (56) ou générer ou effacer un enregistrement dans une banque de données de compte (16) en réponse à la réception des données d'identification si celles-ci ont été reçues pour la première fois.
